(19) **Europäisches Patentamt / European Patent Office / Office européen des brevets**

(11) **EP 1 628 863 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **04739668.4**

(22) Anmeldetag: **07.06.2004**

(51) Int Cl.:
**B60T 8/17** *(2006.01)*

(86) Internationale Anmeldenummer:
**PCT/EP2004/006136**

(87) Internationale Veröffentlichungsnummer:
**WO 2004/108494 (16.12.2004 Gazette 2004/51)**

(54) **VORRICHTUNG UND VERFAHREN ZUM MESSEN VON BEWEGUNGSGRÖSSEN EINES KRAFTFAHRZEUGS**

DEVICE AND METHOD FOR MEASURING QUANTITIES OF MOTION OF A MOTOR VEHICLE

DISPOSITIF ET PROCEDE POUR MESURER DES PARAMETRES DE MOUVEMENT D'AUTOMOBILE

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.06.2003 DE 10325548**

(43) Veröffentlichungstag der Anmeldung:
**01.03.2006 Patentblatt 2006/09**

(73) Patentinhaber: **Munnix, Pascal**
**81929 München (DE)**

(72) Erfinder: **Munnix, Pascal**
**81929 München (DE)**

(74) Vertreter: **Jacoby, Georg et al**
**Samson & Partner**
**Widenmayerstrasse 5**
**80538 München (DE)**

(56) Entgegenhaltungen:
| | |
|---|---|
| **EP-A- 1 053 917** | **DE-C- 10 121 391** |
| **US-A- 6 023 664** | **US-B1- 6 513 832** |

- **PATENT ABSTRACTS OF JAPAN Bd. 0161, Nr. 05 (P-1325), 16. März 1992 (1992-03-16) & JP 3 282371 A (NEC CORP), 12. Dezember 1991 (1991-12-12)**

**Beschreibung**

Die Erfindung betrifft allgemein Vorrichtungen und Verfahren zum Messen von Bewegungsgrößen und insbesondere Vorrichtungen und ein Verfahren zum Messen von Bewegungsgrößen zur Fahrzustandserkennung eines Kraftfahrzeugs mittels Sensoren.

Eine wichtige Aufgabe von Fahrdynamikregelsystemen und Kraftfahrzeugsicher-heitssystemen ist es, das Fahrzeug in kritischen Situationen, etwa wenn es ins Schleudern gerät, zu stabilisieren. Die ersten serienmäßig eingeführten Systeme zur Lösung dieser Aufgabe waren Antiblockierregelsysteme (ABS) und Antriebsschlupfregelsysteme (ASR), die primär auf das längsdynamische Verhalten des Kraftfahrzeugs wirken. Als grundlegende Erweiterung wurden Fahrdynamikregelsysteme entwickelt, die auch in querdynamisch kritischen Situationen durch geregelte Maßnahmen wie die aktive Bremsung einzelner Räder, Steuerung des Antriebsmoments zur Realisierung von Schlüpfen an den Rädern und/oder durch aktive Lenkung das Verhalten des Fahrzeugs stabilisierend beeinflussen. Solche Systeme sind beispielsweise das Electronic Stability Program (ESP) oder das Activ Front Steering (AFS) zum geregelten Lenkeingriff von BMW.

Allen Fahrdynamikregelsystemen ist gemeinsam, daß sie zunächst den Fahrzustand möglichst genau ermitteln müssen, wozu unter anderem Bewegungssensoren benötigt werden. Je mehr dieser Bewegungsgrößen und Fahrzustandsparameter bekannt sind, desto besser und zuverlässiger kann grundsätzlich der Fahrzustand ermittelt werden und desto effektiver und sicherer kann einem ungewünschten Verhalten des Fahrzeugs entgegengesteuert werden. Beispielsweise kann durch zusätzlich bekannte Bewegungsgrößen die Plausibilität des ermittelten Fahrzustandes überprüft werden. Außerdem kann es in außergewöhnlichen Fahrsituationen wie etwa in extremen Steilkurven ohne Verwendung solcher weiterer Bewegungsgrößen gegebenenfalls nicht mehr möglich sein, eine Regelung und damit Stabilisierung des Fahrzeugs sicherzustellen. Hierzu sind jedoch in der Regel weitere Bewegungssensoren notwendig, die die Kosten eines Fahrdynamikregelsystems oder Sicherheitssystems in die Höhe treiben. Darin begründet sich ein grundsätzliches Bestreben der Hersteller solcher Systeme, die Zahl der benötigten Sensorelemente möglichst gering zu halten, zumal es teilweise aus Sicherheitsgründen zumindest für die wichtigsten Bewegungssensoren geboten erscheint, diese redundant auszulegen, so daß zur Messung jeder weiteren Bewegungsgröße zwei Sensorelemente zu den entsprechend erhöhten Kosten verbaut werden müssten.

Vor diesem Hintergrund ist es Aufgabe der vorliegenden Erfindung, Vorrichtungen und Verfahren zur Verfügung zu stellen, die eine Optimierung der Messung und Bestimmung von Bewegungsgrößen mit möglichst wenig Sensoren erlauben.

Vorrichtungen und Verfahren zum Messen von Bewegungsgrößen zur Fahrzustandserkennung eines Kraftfahrzeugs gemäß dem Oberbegrift der Ansprüche 1,12 und 16 sind aus den Dokunenfen US6513832 und EP 1053917 bekannt.

Die Erfindung stellt gemäß einem ersten Aspekt eine Vorrichtung zum Messen von Bewegungsgrößen zur Fahrzustandserkennung eines Kraftfahrzeugs bereit. Die Vorrichtung umfaßt einen ersten Sensor zur Messung einer Bewegungsgröße entlang einer ersten Richtung im Raum und einen zweiten Sensor zur Messung der Bewegungsgröße entlang einer zweiten Richtung im Raum, wobei die erste Sensormeßrichtung mit der zweiten Meßrichtung einen Winkel bildet. Dadurch kann den beiden Sensormeßrichtungen eine Grundrichtung und eine Zusatzrichtung zugeordnet werden. Die Grundrichtung stimmt dabei mit einer der beiden Sensormeßrichtungen überein oder liegt zwischen beiden Sensormeßrichtungen, so daß beide Sensormeßrichtungen eine Komponente entlang der Grundrichtung aufweisen. Die Zusatzrichtung ist zur Grundrichtung im wesentlichen orthogonal und liegt in der durch die beiden Sensormeßrichtungen aufgespannten Ebene, so daß mindestens eine der beiden Sensormeßrichtungen auch eine Komponente entlang der Zusatzrichtung aufweist. Die Vorrichtung ist dabei derart ausgebildet, daß einerseits zwei im wesentlichen redundante Werte der Bewegungsgröße entlang der Grundrichtung gemessen werden und andererseits ausgehend von den Meßwerten des ersten Sensors und den Meßwerten des zweiten Sensors zusätzlich die Bewegungsgröße entlang der Zusatzrichtung berechnet wird.

Gemäß einem anderen Aspekt stellt die Erfindung eine Vorrichtung zum Messen von Bewegungsgrößen zur Fahrzustandserkennung eines Kraftfahrzeugs bereit. Die Vorrichtung umfaßt einen Satz von ersten Sensoren zur Messung einer Bewegungsgröße entlang verschiedener Richtungen, deren Sensormeßrichtungen ein orthogonales System in der Ebene oder im Raum bilden. Dabei wird ein Sensor aus dem Satz von ersten Sensoren ausgewählt, dessen Meßwert überwacht werden soll. Die Vorrichtung umfaßt außerdem einen zweiten Sensor zur Messung einer Bewegungsgröße entlang einer zweiten Richtung. Dabei bildet die zweite Sensormeßrichtung einen spitzen Winkel mit jeder der Sensormeßrichtungen des orthogonalen Systems, so daß sie eine Komponente entlang jeder der Sensormeßrichtungen des orthogonalen Systems aufweist. Die Vorrichtung ist dabei derart ausgebildet, daß ausgehend von den Meßwerten des oder der nicht zu überwachenden ersten Sensoren und dem Meßwert des zweiten Sensors die Bewegungsgröße entlang der Sensormeßrichtung des zu überwachenden ersten Sensors berechnet wird, um für diesen einen redundanten zweiten Meßwert zur Überwachung zu erhalten.

Gemäß einem weiteren Aspekt ist die Erfindung auf ein Verfahren zum Messen von Bewegungsgrößen zur Fahrzustandserkennung eines Kraftfahrzeugs gerichtet, bei dem eine Bewegungsgröße entlang einer ersten Richtung im Raum mit einem ersten Sensor gemessen wird. Die Bewegungsgröße wird entlang einer zweiten Richtung im Raum mit einem zweiten Sensor gemessen, wobei die erste Sensormeßrichtung mit der zweiten Sensormeßrichtung einen Winkel bildet. Dadurch kann den beiden Sensormeßrichtungen eine Grundrichtung und eine Zusatzrichtung zugeordnet werden. Die Grundrichtung stimmt dabei mit einer der beiden Sensormeßrichtungen überein oder liegt zwischen beiden Sensormeßrichtungen, so daß beide Sensormeßrichtungen eine Komponente entlang der Grundrichtung aufweisen. Die Zusatzrichtung ist im wesentlichen orthogonal zur Grundrichtung und liegt in der durch die beiden Sensormeßrichtungen aufgespannten Ebene, so daß mindestens eine der beiden Sensormeßrichtungen auch eine Komponente entlang der Zusatzrichtung aufweist. Auf Basis der Messungen der beiden Sensoren werden zwei im wesentlichen redundante Werte der Bewegungsgröße entlang der Grundrichtung bestimmt. Ausgehend von den Meßwerten des ersten Sensors und den Meßwerten des zweiten Sensors wird die Bewegungsgröße entlang der Zusatzrichtung berechnet.

Die Erfindung wird nun anhand von bevorzugten, beispielhaften Ausführungsformen und der beigefügten beispielhaften Zeichnungen näher erläutert. In den Zeichnungen zeigen:

Figur 1    eine schematische Darstellung von Fahrzeugbewegungsgrößen;

Figur 2    eine schematische Darstellung der gegenseitigen Ausrichtung zweier Bewegungssensoren gemäß einer bevorzugten Ausführungsform;

Figur 3    eine schematische Darstellung der gegenseitigen Ausrichtung zweier Bewegungssensoren gemäß einer anderen bevorzugten Ausführungs-form;

Figur 4    eine schematische Darstellung der Komponenten der beiden Sensoren bezüglich einer Grundrichtung und einer Zusatzrichtung gemäß einer bevorzugten Ausführungsform;

Figur 5    eine schematische Darstellung der Komponenten der Bewegungssensoren im Raum gemäß einer anderen bevorzugten Ausführungsform.

Zur Fahrzustandserkennung können eine Vielzahl von Parametern dienen, von denen hier nur beispielhaft die Drehgeschwindigkeiten des Kraftfahrzeugs um verschiedene Achsen im Raum, die Beschleunigung, der Lenkwinkel, die vier Radgeschwindigkeiten, das Antriebsmoment oder der Bremsdruck genannt werden, wobei eine bevorzugte Ausführungsform sich insbesondere mit den Parametern befaßt, die Bewegungsgrößen darstellen. Diese sind bevorzugt eine Drehrate, ein Beschleunigungswert, eine Geschwindigkeit oder eine Kraft wie etwa die auf die Räder wirkende Kraft. Diese Bewegungsgrößen werden bevorzugt für Fahrdynamikregelsysteme oder Kraftfahrzeugsicherheitssysteme, wie beispielsweise Airbagsysteme oder Überschlagserkennungssysteme, verwendet.

Bei den Drehraten handelt es sich bevorzugt um Drehgeschwindigkeiten um die Hauptachsen des Kraftfahrzeugs, also um die Längsachse, die Querachse und die Hochachse, die in der Regel durch den Schwerpunkt des Kraftfahrzeugs verlaufen. Diese an dem orthogonalen Hauptachsen-Koordinatensystem des Kraftfahrzeugs anknüpfenden Bewegungsgrößen werden hier auch als kanonische Bewegungsgrößen bezeichnet. Hinsichtlich der Drehraten beschreibt die sogenannte Gierrate eine Drehung des Kraftfahrzeugs um dessen Hochachse, die Rollrate eine Drehung um die Fahrzeuglängsachse, also ein seitliches Kippen des Fahrzeugs, und die Nickrate eine Drehung um die Fahrzeugquerachse. Hinsichtlich der Beschleunigungswerte des Kraftfahrzeugs sind dies die Querbeschleunigung, die Längsbeschleunigung und die Vertikalbeschleunigung entsprechend entlang der Quer-, Längs- und Hochachse des Kraftfahrzeugs.

Diese Bewegungsgrößen werden bei den bevorzugten Ausführungsformen mit Hilfe bekannter Sensoren gemessen. Beispielsweise sind Querbeschleunigungssensoren bekannt, die auf dem Prinzip eines mit einem Kondensator gekoppelten Biegebalkens beruhen, während Gierraten-Sensoren z.B. zur Messung der Drehbewegung den Corioliseffekt ausnutzen.

Unter Kraftfahrzeug werden hier alle Arten von Fahrzeugen, insbesondere aber Personen- und Lastkraftwagen oder Omnibusse verstanden, in denen Fahrdynamikregelsysteme oder Sicherheitssysteme zum Einsatz kommen.

Eine bevorzugte Ausführungsform nutzt nun die Tatsache, daß in den gegenwärtigen Fahrdynamikregelsystemen und Sicherheitssystemen Sensoren vorhanden sind; die aus Sicherheitsgründen teilweise redundant ausgelegt sind, d.h. daß für die Messung einer Bewegungsgröße in einer Raumrichtung, also z.B. der Gierrate, zwei Sensoren oder Sensorelemente eingebaut sind, die zwei unabhängige Meßwerte liefern. Diese beiden unabhängigen Meßwerte werden dann dazu verwendet, um sich gegenseitig zu überwachen, so daß ein Fehler einer der beiden redundanten Sensoren sehr schnell erkannt werden kann. Damit kann die Wahrscheinlichkeit, daß der Regler mit einer falschen Eingangsgröße arbeitet, sehr stark reduziert werden. Beispielsweise kann als Kriterium für einen möglichen Meßfehler eine zu große Abweichung der beiden unabhängig voneinander gemessenen Meßwerte der redundanten Sensoren herangezogen werden, um dann beispielsweise mittels Plausibilitätsüberprüfungen den fehlerhaften Sensor zu identifizieren und von der Regelung auszuschließen. Aufgrund des zweiten vorhandenen Meßwertes kann die Fahrzeugregelung in einem solchen Fall trotzdem fehlerfrei weitergeführt werden. Andererseits kann beispielsweise durch Mittelung beider Meßwerte der beiden redundanten Sensoren kleinere statistische Schwankungen ausgeglichen werden und somit die Genauigkeit der Messung verbessert werden. Beide Effekte tragen erheblich zur Sicherheit des Fahrdynamikregelsystems bei.

Üblicherweise sind die beiden redundanten Sensoren parallel zueinander in Richtung der zu messenden Bewegungsgröße ausgerichtet. Gemäß einer bevorzugten Ausführungsform wird nun ein erster Sensor zur Messung der Bewegungsgröße entlang einer ersten Richtung im Raum ausgerichtet und ein zweiter Sensor zur Messung der Bewegungsgröße an einer zweiten Richtung im Raum, wobei die erste Sensormessrichtung mit der zweiten Sensormessrichtung einen Winkel bildet. Die beiden Meßrichtungen des ersten und zweiten Sensors sind somit nicht parallel ausgerichtet. Man kann nun beiden Sensormeßrichtungen eine Grundrichtung und eine Zusatzrichtung zuordnen, wobei in einer bevorzugten Ausführungsform die Grundrichtung mit einer der beiden Sensormeßrichtungen übereinstimmt und in einer anderen bevorzugten Ausführungsform die Grundrichtung zwischen beiden Sensormeßrichtungen liegt, wobei diese nicht notwendigerweise symmetrisch in der Mitte zwischen den beiden Sensormeßrichtungen liegen muß, sondern auch unterschiedliche Winkel jeweils mit der einen und anderen Sensormeßrichtung einschließen kann. Bevorzugt wird jedoch die Grundrichtung die Symmetrieachse, d.h. die Winkelhalbierende der beiden Sensormeßrichtungen bilden. Aufgrund dieser Anordnung weisen beide Sensormeßrichtungen eine Komponente entlang der Grundrichtung auf. Die Grundrichtung kann beispielsweise die Hochachse des Kraftfahrzeugs sein, so daß die entlang dieser Grundrichtung gemessene Bewegungsgröße zum Beispiel die Gierrate ist.

Die Zusatzrichtung dagegen ist im wesentlichen orthogonal zur Grundrichtung und liegt in der durch die beiden Sensormeßrichtungen aufgespannten Ebene. Damit weist in dem Fall, daß die Grundrichtung mit einer der beiden Sensormeßrichtungen übereinstimmt, jedenfalls eine der beiden Sensormeßrichtungen eine Komponente entlang der Zusatzrichtung auf, während im anderen Fall sogar beide Sensormeßrichtungen auch eine Komponente entlang der Zusatzrichtung besitzen. Diese Zusatzrichtung könnte beispielsweise entlang der Fahrzeuglängsachse orientiert sein, so daß, wenn die mit den Sensoren gemessene Bewegungsgröße eine Drehrate ist, die Bewegungsgröße entlang der Zusatzrichtung die Rollrate darstellt.

Die bevorzugten Ausführungsformen sind nun derart ausgebildet, daß sie einerseits zwei im wesentlichen redundante Werte der Bewegungsgröße entlang der Grundrichtung messen und andererseits, ausgehend von den Meßwerten des ersten Sensors und den Meßwerten des zweiten Sensors zusätzlich die Bewegungsgröße entlang der Zusatzrichtung berechnen. Der Winkel zwischen den beiden Sensormeßrichtungen führt also dazu, daß zusätzlich noch eine weitere Bewegungsgröße ermittelt werden kann, da zumindest einer der beiden Sensoren auch eine Komponente der Bewegungsgröße in diese Richtung mißt, die aufgrund der bekannten Geometrie berechnet werden kann. Andererseits wird bei einem kleinen Winkel zwischen den beiden Sensormeßrichtungen der Hauptteil des gemessenen Wertes des leicht schräg orientierten Sensors von der Komponente entlang der Grundrichtung stammen, so daß weiterhin zumindest näherungsweise ein redundanter Wert für die Messung entlang der Grundrichtung gewonnen werden kann.

Bevorzugt handelt es sich bei dem Winkel zwischen der ersten und der zweiten Sensormeßrichtung um einen kleinen Winkel.

Je kleiner dieser Winkel gewählt wird, desto besser wird die Redundanz sein. Andererseits muß berücksichtigt werden, daß durch das Verringern des Winkels auch das Signal der Bewegungsgröße entlang der Zusatzrichtung reduziert wird. Eine untere Grenze für den Winkel ergibt sich daher aus der Bedingung, daß noch ausreichend Signal der Bewegungsgröße in der Zusatzrichtung gemessen werden kann, um eine zuverlässige Bestimmung der Bewegungsgröße in dieser Richtung zu erlauben. Bevorzugt wird demnach der Winkel größer als 0 Grad und kleiner als 45° sein, wobei er besonders bevorzugt aus einem Bereich zwischen ungefähr 5° und 10° gewählt wird. Die genaue Bestimmung des optimalen Winkels hängt von den speziellen Randbedingungen des Fahrdynamikregelsystems und dem geplanten Einsatzbereich ab. Ein Kriterium zur Bestimmung des optimalen Winkels ist dabei die Toleranz des Reglers gegenüber Fehlern des Meßwerts der Bewegungsgröße entlang der Grundrichtung, die einen Richtwert bzw. einen Grenzbereich vorgibt, innerhalb dessen die Abweichungen zwischen den beiden gemessenen Werten der beiden Sensoren liegen sollte.

In einer bevorzugten Ausführungsform wird die berechnete Bewegungsgröße entlang der Zusatzrichtung direkt als Eingang für den Regler des Fahrdynamikregelsystems oder Sicherheitssystems verwendet. Das heißt beispielsweise, daß, wenn die Bewegungsgröße entlang der Zusatzrichtung die Rollrate des Fahrzeugs darstellt, diese berechnete Rollrate zusätzlich in den Regelkreis einfließt und damit das Fahrdynamikregelsystem um einen weiteren Fahrzustandsparameter bereichert, ohne daß dafür ein weiterer teurer Sensor benötigt wird. Der Regler kann beispielsweise diese zusätzlich gewonnene Bewegungsgröße nutzen, um die Genauigkeit anderer Regel- oder Stellgrößen zu erhöhen, um Plausibilitätskontrollen des mittels der anderen Bewegungsgrößen festgestellten Fahrzustands durchzuführen oder um auch in extremen Fahrzeugzuständen wie etwa einer starken Seitenneigung und/oder in Steilkurven noch eine sichere Funktion zu erlauben. Durch Ausnutzen der bereits standardmäßig vorhandenen zwei redundanten Sensorelementen kann mit den bevorzugten Ausführungsformen erreicht werden, daß dem Fahrdynamikregelsystem eine weitere zusätzliche Bewegungsgröße zur Verfügung gestellt wird, ohne daß dazu ein weiterer teurer Sensor eingebaut werden muß und ohne daß hierzu zumindest innerhalb gewisser Grenzen auf die aus Sicherheitsgründen geforderte Redundanz verzichtet wird.

In einer anderen bevorzugten Ausführungsform umfaßt die Vorrichtung einen dritten Sensor, der selbst die Bewegungsgröße entlang der Zusatzrichtung mißt. Der berechnete Wert der Bewegungsgröße entlang der Zusatzrichtung wird dann als redundanter Wert verwendet, um den Meßwert dieses dritten Sensors zu überwachen. Bei dieser Ausführungsform gewinnt man somit keine neue Bewegungsgröße an sich, da diese bereits durch den dritten Sensor gemessen wird, es erhöht sich jedoch die Sicherheit des Systems, da dieser nur von einem Sensor gemessene Wert mittels eines zweiten Meßwertes redundant überwacht werden kann, wobei gegebenenfalls weitere Fahrzustandsparameter zur Identifizierung des fehlerhaften Sensors berücksichtigt werden können.

Bei einer bevorzugten Ausführungsform stellt die Bewegungsgröße eine Drehrate dar und besonders bevorzugt die Bewegungsgröße entlang der Grundrichtung die Gierrate und die Drehrate entlang der Zusatzrichtung die Roll- oder Nickrate des Kraftfahrzeugs.

In anderen bevorzugten Ausführungsformen ist die Drehrate entlang der Grundrichtung die Rollrate und die Drehrate entlang der Zusatzrichtung die Gier- oder Nickrate des Fahrzeugs. In noch anderen Ausführungsformen stellt die Drehrate entlang der Grundrichtung die Nickrate und die Drehrate entlang der Zusatzrichtung die Gier- oder Rollrate des Fahrzeugs dar. Es sind somit alle möglichen Kombinationen in den bevorzugten Ausführungsformen realisierbar.

Gleiches gilt für diejenigen Ausführungsformen, in denen die Bewegungsgröße einen Beschleunigungswert darstellt. Auch hier ist jede beliebige Kombination der Beschleunigungswerte entlang der Hauptachsen des Kraftfahrzeugs, also der Querbeschleunigung, der Längsbeschleunigung und der Vertikalbeschleunigung für die Grundrichtung und die Zusatzrichtung im Rahmen der bevorzugten Ausführungsformen realisierbar. Besonders bevorzugt ist der Beschleunigungswert entlang der Grundrichtung die Querbeschleunigung des Kraftfahrzeugs und der Beschleunigungswert entlang der Zusatzrichtung die Längs- oder Vertikalbeschleunigung.

In den bisher beschriebenen bevorzugten Ausführungsformen fiel die Bewegungsgröße entlang der Zusatzrichtung stets mit einer kanonischen Bewegungsgröße; also einer Bewegungsgröße entlang der Hauptachsen des Kraftfahrzeugs, überein, so daß durch die Berechnung der Bewegungsgröße entlang dieser Zusatzrichtung direkt ein Wert für eine der kanonischen Bewegungsgrößen ermittelt wird. In einer anderen bevorzugten Ausführungsform ist die Bewegungsgröße entlang der Grundrichtung eine kanonische Bewegungsgröße, jedoch entlang der Zusatzrichtung keine kanonische Bewegungsgröße, sondern eine Bewegungsgröße entlang einer Richtung, die in einer aus den zwei anderen Richtungen der kanonischen Bewegungsgröße aufgespannten Ebene liegt. Das heißt, die Bewegungsgröße entlang der Grundrichtung ist weiterhin eine kanonische Bewegungsgröße, entlang der Zusatzrichtung handelt es sich jedoch weder um die eine noch die andere der beiden verbleibenden kanonischen Bewegungsgrößen, sondern die Zusatzrichtung liegt zwischen den Richtungen der beiden verbleibenden kanonischen Bewegungsgrößen. Die Zusatzrichtung bildet somit mit diesen einen Winkel, wobei sie nicht notwendigerweise in der Mitte, d.h. als Winkelhalbierende dieser beiden Hauptachsen ausgerichtet ist, sondern bevorzugt auch mit einer dieser beiden Hauptachsen einen, bevorzugt kleinen Winkel einschließt.

Diese Anordnung gemäß einer bevorzugten Ausführungsform eröffnet zwei weitere Anwendungsmöglichkeiten. In einer weiteren bevorzugten Ausführungsform weist die Vorrichtung einen dritten und vierten Sensor auf, die die Bewegungsgröße entlang der Richtungen der beiden anderen kanonischen Bewegungsgrößen messen. Die berechnete Bewegungsgröße entlang der Zusatzrichtung, die weder mit der dritten noch mit der vierten Sensormeßrichtung übereinstimmt und bevorzugt mit diesen beiden einen Winkel von 45° einschließt, dient nun als zusätzlicher redundanter Wert, um die Meßwerte des dritten und vierten Sensors zu überwachen. Es kann nämlich mit Hilfe der berechneten Bewegungsgröße entlang dieser Zusatzrichtung entweder mit Hilfe des Meßwerts des dritten Sensors der Meßwert des vierten Sensors überwacht werden oder, umgekehrt, mit Hilfe des Meßwerts des vierten Sensors der Meßwert des dritten Sensors überwacht werden. Das heißt, man kann, wenn man unterstellt, daß der eine der beiden Sensoren fehlerfrei mißt, jeweils den anderen Sensor überwachen, wobei dies selbstverständlich auch wechselweise erfolgen kann.

Bei der anderen Anwendungsmöglichkeit weist eine weitere bevorzugte Ausführungsform nur einen dritten Sensor auf, der die Bewegungsgröße entlang einer ersten Richtung der beiden anderen kanonischen Bewegungsgrößen mißt und diese dritte Sensormeßrichtung mit der Zusatzrichtung einen, bevorzugt kleinen Winkel bildet. Die berechnete Bewegungsgröße entlang der Zusatzrichtung dient nun einerseits als redundanter Wert, um den Meßwert des dritten Sensors zu überwachen und andererseits, ausgehend von dem Meßwert des dritten Sensors und der berechneten Bewegungsgröße entlang der Zusatzrichtung zusätzlich die Bewegungsgröße entlang der zweiten Richtung der beiden anderen kanonischen Bewegungsgrößen zu berechnen. Es kann somit ein Sensor, nämlich der vierte Sensor, eingespart werden und dennoch die Bewegungsgröße entlang dessen Meßrichtung ermittelt werden, wobei gleichzeitig auch ein redundanter Wert für die Bewegungsgröße entlang der dritten Sensormeßrichtung zur Verfügung steht. Somit wird die leicht zueinander gekippte Anordnung der Sensormeßrichtungen ein zweites Mal angewendet, diesmal zusätzlich auf die Ebene, die durch die beiden anderen kanonischen Bewegungsgrößen aufgespannt wird, die nicht der Grundrichtung entsprechen. Daher gilt für die Bestimmung und Optimierung des Winkels zwischen der dritten Sensormeßrichtung und der Zusatzrichtung das oben gesagte analog, d.h. daß der Winkel bevorzugt größer 0° und kleiner 45° sein sollte und besonders bevorzugt aus dem Bereich zwischen ungefähr 5° und 10° gewählt wird.

Es kann also bei der ersten Anwendungsmöglichkeit beispielsweise mittels zweier Sensoren die Gierrate redundant überwacht werden, während die Zusatzrichtung derart ausgerichtet ist, daß sie entlang der Winkelhalbierenden zwischen den Richtungen der Rollrate und der Nickrate liegt und dadurch entweder die Nickrate redundant kontrolliert wird, wenn man die Rollrate als fehlerfrei unterstellt, oder die Rollrate redundant kontrolliert wird, wenn man die Nickrate als fehlerfrei annimmt. Bei der zweiten Anwendungsmöglichkeit kann beispielsweise die Gierrate mit den zwei Sensoren redundant überwacht werden und die Rollrate mit dem dritten Sensor gemessen werden, wobei, wenn die Zusatzrichtung derart ausgerichtet ist, daß sie mit der Rollraten-Richtung einen, bevorzugt kleinen Winkel bildet, der berechnete Wert für die Drehrate entlang der Zusatzrichtung einerseits verwendet werden kann, um den Meßwert des Rollraten-Sensors redundant zu überwachen und andererseits, um einen weiteren Wert für die Nickrate zu ermitteln, ohne daß hierfür ein Sensor benötigt wird.

In der vorliegenden Beschreibung wird der Begriff Sensor im funktionellen Sinne verstanden, d.h. als eine Meßeinheit, die eine Bewegungsgröße entlang einer Richtung im Raum messen kann. In einer bevorzugten Ausführungsform können daher die verwendeten Sensoren als einzelne Sensor-Elemente ausgebildet sein, die jeweils ein eigenständiges Gehäuse, Ansteuerung etc. aufweisen. In einer anderen bevorzugten Ausführungsform sind diese Sensoren in einem sogenannten Sensor-Cluster ausgebildet, das einige oder alle Sensoren der Vorrichtung in einer Einheit zusammenfaßt, d.h. die einzelnen Sensor-Elemente sind beispielsweise an einem Gehäuse untergebracht und können damit auch gemeinsam ein- und ausgebaut werden. Beispielsweise könnte ein solches Sensor-Cluster GierratenSensoren, Querbeschleunigungssensoren und Längsbeschleunigungssensoren aufweisen, die gegebenenfalls alle oder teilweise jeweils als redundantes Sensor-Paar ausgebildet sind.

In einer bevorzugten Ausführungsform werden nicht einzelne Sensorelemente gegeneinander unter einem Winkel verkippt angeordnet, sondern ganze SensorCluster. Diese Sensor-Cluster werden teilweise standardisiert hergestellt und sind daher ggf. günstiger. Es werden bevorzugt zwei identische Sensor-Cluster verbaut, so daß jeweils die korrespondierenden Sensorelemente redundant ausgelegt sind. Die Sensorelemente eines Sensor-Clusters sind dabei untereinander starr verbunden. Sollen nun zwei Sensormeßrichtungen, etwa die beiden Gierratensensoren und die beiden Rollratensensoren, gemäß der bevorzugten Ausführungsform unter einem, bevorzugt kleinen Winkel gegeneinander verkippt werden, so führt dies aufgrund des Verkippens der starr miteinander verbundenen Sensorelemente der jeweiligen Sensor-Cluster dazu, daß die Sensorelemente aus ihren Hauptebenen herausgekippt werden. Dadurch erhalten sie ggf. eine Komponente entlang einer weiteren Hauptachse. Wird beispielsweise ein Sensor-Clusterpaar mit jeweils einem Gierratensensor und einem Rollratensensor zunächst aus der zu den Hauptachsen parallelen Anordnung gegeneinander um einen, bevorzugt kleinen Winkel um die Querachse des Kraftfahrzeugs gekippt, so daß die Gierratensensoren zusätzlich eine Komponente der Rollrate erhalten, und anschließend ebenfalls um einen, bevorzugt kleinen Winkel um die Hochachse, so daß die Rollratensensoren zusätzlich eine Komponente der Nickrate erhalten, so weisen auch die Gierratensensoren eine Komponente der Nickrate auf, die ggf. einen Meßfehler bei ihrer redundanten Messung der Gierrate erzeugen kann. Dieser Fehler ist jedoch aufgrund der kleinen Winkel akzeptabel und wird in dieser Ausführungsform für den Vorteil in Kauf genommen, standardisierte SensorCluster verwenden zu können.

Bei einer anderen bevorzugten Ausführungsform ist das Ziel, einen Satz von ersten Sensoren mittels eines zweiten Sensors jeweils redundant zu überwachen, wobei immer angenommen werden muß, daß die ersten Sensoren, die nicht gerade überwacht werden, fehlerfrei arbeiten. Die Überwachung kann selbstverständlich wechselweise durchgeführt werden, so daß alle Sensoren des Satzes von ersten Sensoren redundant überwacht werden können. Dazu weist diese bevorzugte Ausführungsform einen Satz von ersten Sensoren zur Messung einer Bewegungsgröße entlang verschiedener Richtungen auf, deren Sensormeßrichtungen ein orthogonales System in der Ebene oder im Raum bilden. Der Meßwert eines Sensors aus dem Satz von ersten Sensoren soll dabei redundant überwacht werden. Desweiteren weist diese bevorzugte Ausführungsform einen zweiten Sensor zur Messung einer Bewegungsgröße entlang einer zweiten Richtung auf, wobei die zweite Sensormeßrichtung einen spitzen Winkel mit jeder der Sensormeßrichtungen des orthogonalen Systems bildet, so daß sie eine Komponente entlang jeder der Sensormeßrichtungen des orthogonalen Systems aufweist. Ausgehend von den Meßwerten der nicht zu überwachenden ersten Sensoren und dem Meßwert des zweiten Sensors kann die Bewegungsgröße entlang der Sensormeßrichtung des zu überwachenden ersten Sensors berechnet werden, um für diesen einen redundanten zweiten Meßwert zur Überwachung zu erhalten.

Diese bevorzugte Ausführungsform kann sowohl in der Ebene als auch im dreidimensionalen Raum realisiert werden. Im ersten Fall umfaßt der Satz von ersten Sensoren zwei Sensoren, deren Sensormeßrichtungen orthogonal zueinander ausgerichtet sind und von denen einer überwacht werden soll. Der zweite Sensor liegt dabei in der durch die beiden ersten Sensoren aufgespannten Ebene. Im dreidimensionalen Fall umfaßt der Satz von ersten Sensoren drei Sensoren, deren Sensormeßrichtungen jeweils orthogonal zueinander ausgerichtet sind.

Bevorzugt ist dabei die Bewegungsgröße eine Drehrate oder ein Beschleunigungswert des Kraftfahrzeugs, wobei besonders bevorzugt die kanonischen Bewegungsgrößen entlang der Hauptachse des Kraftfahrzeugs betrachtet werden, nämlich die Gier-, Roll- oder Nickrate bei den Drehraten bzw. die Quer-, Längsoder Vertikalbeschleunigung bei den Beschleunigungswerten des Kraftfahrzeugs.

Eine bevorzugte Ausführungsform weist demnach drei erste Senoren, nämlich Drehraten-Sensoren entlang der Hauptachsen des Fahrzeugs auf, und zwar einen Gierraten-Sensor, einen Rollraten-Sensor und einen Nickraten-Sensor, und zusätzlich einen zweiten Sensor, der beispielsweise entlang der Raumdiagonalen ausgerichtet ist. Insgesamt weist die Vorrichtung somit vier Sensoren auf, um drei Drehraten redundant zu überwachen. Der zweite Sensor in Richtung der Raumdiagonalen überwacht dann redundant die Meßwerte der drei anderen Sensoren, wobei beispielsweise bei der Überwachung der Gierrate jeweils die Meßwerte der Rollrate und der Nickrate als fehlerfrei angenommen werden müssen. Aus der bekannten Geometrie der Anordnung der Sensoren kann dann jeweils die Komponente des zweiten Sensors bezüglich der zu überwachenden Sensorrichtung berechnet werden, wenn die Meßwerte der beiden anderen gerade nicht überwachten Sensorrichtungen bekannt sind.

Bevorzugt ist die zweite Sensormeßrichtung entlang einer Diagonalen in der Ebene bzw. einer Raumdiagonalen ausgerichtet. Das heißt, daß sie mit den Sensormeßrichtungen der ersten Sensoren jeweils einen Winkel von 45° einschließt.

Bei einer bevorzugten Ausführungsform wird mit der entlang der Zusatzrichtung berechneten Rollrate die den Rollwinkel des Kraftfahrzeugs berechnet. Unter den Rollwinkel des Kraftfahrzeugs versteht man die seitliche Neigung des Kraftfahrzeugs gegenüber der Horizontalen, wie sie etwa bei seitlich hängenden Straßenfahrbahnen, in seitlich überhöhten Steilkurven oder aber auch beim seitlichen Überschlagen des Kraftfahrzeugs auftritt. Die so berechnete Seitenneigung wird in einer bevorzugten Ausführungsform zur Korrektur einer gemessenen Querbeschleunigung verwendet, mit der ggf. die sogenannte Schwimmwinkelgeschwindigkeit des Kraftfahrzeugs berechnet wird. Diese ist eine wichtige Größe zur Beurteilung der Stabilität des Kraftfahrzeugs und damit ein wichtiger Parameter für das Fahrdynamikregelsystem. Vereinfacht ausgedrückt entspricht die Schwimmwinkelgeschwindigkeit der Schleudergeschwindigkeit des Kraftfahrzeugs.

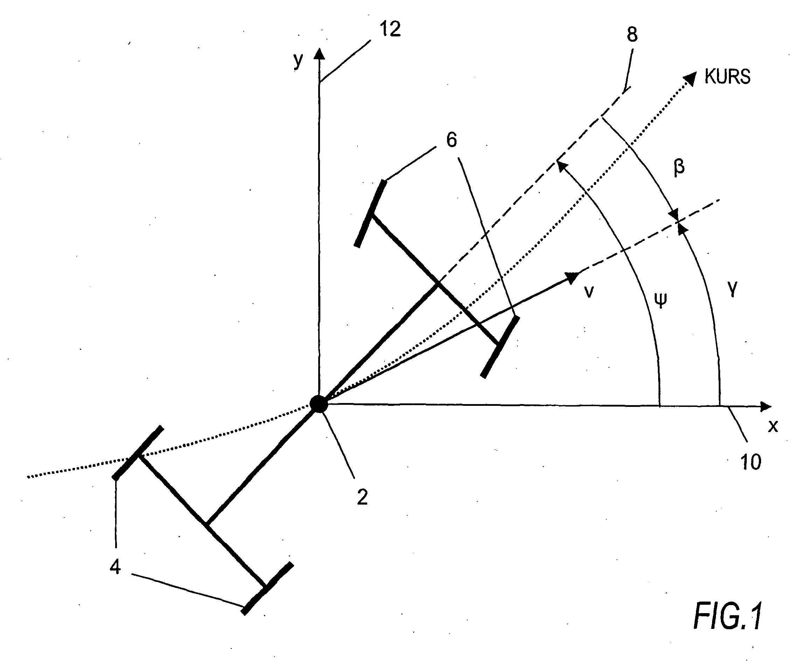

Üblicherweise wird der Schwimmwinkel $\beta$ wie in Fig. 1 dargestellt als Differenz des Gierwinkels $\psi$ und des Kurswinkels $\gamma$ definiert, wobei der Gierwinkel $\psi$ den Drehwinkel des Fahrzeugs um die Hochachse, also um eine vertikale Achse durch den Fahrzeugschwerpunkt 2, entspricht, und der Kurswinkel $\gamma$ die Bewegungsrichtung des Schwerpunkts des Kraftfahrzeugs definiert. Der Gierwinkel $\psi$ wird bezóglich einer Koordinatenachse 10, also der x-Achse, gemessen und gibt damit die Winkelstellung der Fahrzeuglängsachse 8 bezüglich dieser Achse 10 an. Der Kurswinkel $\gamma$ dagegen beschreibt die Ausrichtung des Geschwindigkeitsvektors v des Schwerpunkts 2 des Kraftfahrzeugs, der tangential zum Kurs des Kraftfahrzeugs liegt, bezüglich derselben Koordinatenachse 10. Die Abweichungen dieser beiden Winkel bzw. ihrer Winkelgeschwindigkeiten sind ein Maß für das Driften bzw. Schleudern des Kraftfahrzeugs. Sie sind im übrigen unabhängig von der Wahl eines speziellen Koordinatensystems 10, 12. Außerdem bezeichnen in Fig. 1 die Bezugszeichen 4 bzw. 6 die Radstellung der Hinter- bzw. Vorderräder.

Für die zeitliche Änderung des Schwimmwinkels $\beta$, also der Schwimmwinkelgeschwindigkeit $\beta_t$, erhält man damit folgenden Zusammenhang:

$$\beta_t = \psi_t - \gamma_t \, ,$$

wobei $\psi_t$ und $\gamma_t$ jeweils die zeitlichen Ableitungen des Gier- bzw. Kurswinkels, also die Gierwinkelgeschwindigkeit bzw. Kurswinkelgeschwindigkeit darstellen.

In einer bevorzugten Ausführungsform wird die Gierwinkelgeschwindigkeit $\psi_t$ mittels Gierratensensoren gemessen, während sich die Kurswinkelgeschwindigkeit $\gamma_t$ aus der Querbeschleunigung des Kraftfahrzeugs aq und der Kursgeschwindigkeit v gemäß der Bewegungsgleichung $\gamma_t = a_q/v$ ermitteln läßt. Für die Schwimmwinkelgeschwindigkeit $\beta_t$ ergibt sich somit folgende Gleichung:

$$\beta_t = \psi_t - a_q/v.$$

Diese Gleichung gilt jedoch nur dann, wenn die Fahrbahn keine Seitenneigung aufweist. Ist die Fahrbahn jedoch seitengeneigt, wie etwa in Steilkurven, muß die gemessene Querbeschleunigung $a_q$ um eine aufgrund der Erdbeschleunigung wirkenden Komponente $a_q^{neig}$ korrigiert werden, so daß sich für die Schwimmwinkelgeschwindigkeit $\beta_t$ der folgende Zusammenhang ergibt:

$$\beta_t = \psi_t - (a_q - a_q^{neig})/v,$$

wobei $a_q^{neig}$ derjenigen Querbeschleunigung entspricht, die gemessen werden würde, wenn das Fahrzeug an dieser Stelle stehen würde.

Der sich aufgrund der Seitenneigung ergebende Korrekturterm $a_q^{neig}$ liegt in der gleichen Größenordnung wie typische Querbeschleunigungen des Kraftfahrzeugs in Kurven und kann daher für die Bestimmung der Schwimmwinkelgeschwindigkeit $\beta_t$ nicht vernachlässigt werden. Da in der Regel die Seitenneigung jedoch nicht bekannt ist, wird, sobald die Fahrbahn eine gewisse Seitenneigung aufweist, ein Fehler bei der Schätzung der Schwimmwinkelgeschwindigkeit $\beta_t$ gemacht, der sich mit wachsender Seitenneigung vergrößert. Dieser Fehler könnte dazu führen, daß das Fahrdynamikregelsystem eine Seitenneigung fälschlicherweise für eine nicht-vorhandene Instabilität hält und einen unerwünschten Stelleingriff beispielsweise in Form eines Gegenlenkens oder Abbremsens vornimmt.

Um solche Stelleingriffe zu unterbinden, müßten große Toleranzen auf Seiten des Reglers vorgesehen werden, was jedoch zu einer allgemeinen Reduzierung der Reglerleistung und dessen Empfindlichkeit führen würde. Alternativ könnten zumindest langsame Änderungen und stationäre Seitenneigungen direkt über die Querbeschleunigung gemessen werden. Dies ist jedoch nur möglich, wenn sich das Fahrzeug noch in einem stabilen Zustand befindet. Ein zusätzlicher Rollratensensor, mit dem unter allen Randbedingungen, d.h. insbesondere auch im instabilen Fahrzustand, also z.B. beim Schleudern, auch schnelle Seitenneigungsänderungen gemessen werden könnten, kommt aus Kostengründen in der Regel nicht in Frage.

In einer bevorzugten Ausführungsform wird daher die Gierrate des Kraftfahrzeugs entlang der Grundrichtung redundant gemessen und als Zusatzrichtung die Rollrate gewählt. Durch Integration der Rollrate läßt sich damit die Seitenneigung ermitteln. Um diese offene Integration in regelmäßigen Abständen abzugleichen, wird die Seitenneigung im stabilen Zustand des Kraftfahrzeugs vorteilhafterweise mittels eines Querbeschleunigungssensors nachgeführt. Auf diese Weise können auch schnelle Seitenneigungsänderungen über die Integration der Rollrate festgestellt werden.

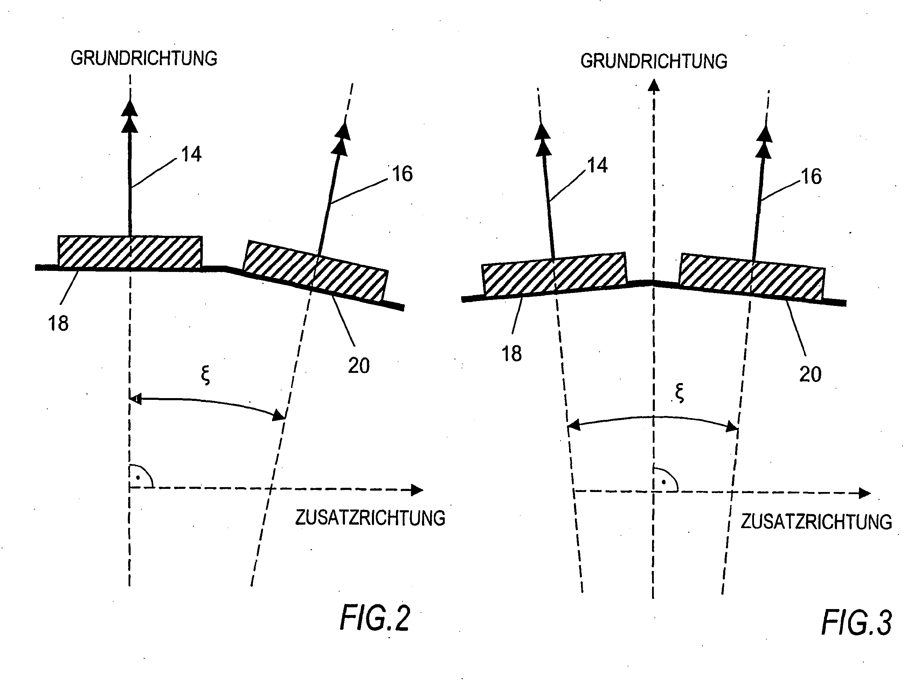

Die Figuren 2 und 3 zeigen zwei bevorzugte Varianten der gegenseitigen Ausrichtung im Raum der ersten Sensormeßrichtung 14 des ersten Sensors 18 und der zweiten Sensormeßrichtung 16 des zweiten Sensors 20. Bei der in Fig. 2 dargestellten Variante ist die erste Sensormeßrichtung 14 des ersten Sensors 18 parallel zur Grundrichtung ausgerichtet und weist keine Komponente bezüglich der orthogonal zur Grundrichtung orientierten Zusatzrichtung auf. Bei der Grundrichtung handelt es sich beispielsweise um eine der Hauptachsen des Kraftfahrzeugs, so daß der erste Sensor 18 entlang dieser Grundrichtung beispielsweise die Gier-, Roll- oder Nickrate oder aber die Quer-, Längs- oder Vertikalbeschleunigung des Kraftfahrzeugs mißt. Die zweite Sensormeßrichtung 16 des zweiten Sensors 20 ist dabei derart ausgerichtet, daß sie mit der Grundrichtung einen, bevorzugt kleinen Winkel $\xi$ einschließt. Die erste Sensormeßrichtung 14, die zweite Sensormeßrichtung 16 und die Zusatzrichtung liegen dabei in derselben Ebene, so daß die zweite Sensormeßrichtung 16 sowohl eine Komponente entlang der Zusatzrichtung als auch eine Komponente entlang der Grundrichtung aufweist, wobei aufgrund des kleinen Winkels $\xi$ die größere Komponente auf die Grundrichtung fällt. Die Zusatzrichtung liegt dabei orthogonal zur Grundrichtung. Damit mißt der zweite Sensor 20 einen im wesentlichen redundanten zweiten Wert für die Bewegungsgröße entlang der Grundrichtung und liefert gleichzeitig aufgrund seiner wenn auch kleinen Komponente entlang der Zusatzrichtung einen weiteren Meßwert für die Bewegungsgröße entlang der Zusatzrichtung.

Bei der in Fig. 3 dargestellten Variante dagegen ist keine der beiden Sensormeßrichtungen 14 und 16 der beiden Sensoren 18 und 20 parallel zur Grundrichtung ausgerichtet. Vielmehr sind sie symmetrisch zur Grundrichtung jeweils um denselben, bevorzugt kleinen Winkel $\xi/2$ angeordnet und schließen untereinander den Winkel $\xi$ ein. Auch in dieser Variante liegen die erste Sensormeßrichtung 14, die zweite Sensormeßrichtung 16, die Grundrichtung und die Zusatzrichtung in einer Ebene. Dadurch weisen die Sensoren 18 und 20 beide jeweils eine Hauptkomponente entlang der Grundrichtung, die zwei redundante Werte für die Bewegungsgröße entlang dieser Richtung liefern, und eine kleine Nebenkomponente entlang der Zusatzrichtung zur zusätzlichen Messung der Bewegungsgröße entlang dieser Richtung auf.

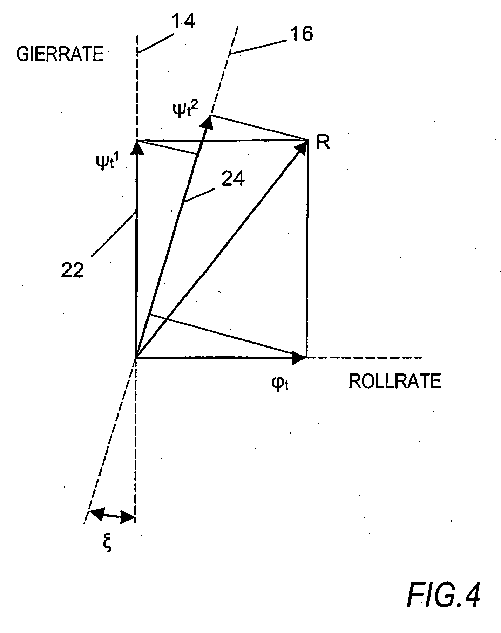

Fig. 4 zeigt die Geometrie der Sensormeßrichtungen und ihrer Komponenten entlang der verschiedenen Richtungen für den Fall der bevorzugten Ausführungsform gemäß der Variante der Fig. 2, bei der als Grundrichtung die Gierrate $\psi_t^1$ parallel zur Hochachse des Kraftfahrzeugs gemessen wird und orthogonal dazu entlang der Längsachse des Kraftfahrzeugs die Rollrate $\varphi_t$. Die um den Winkel $\xi$ gekippte zweite Sensormeßrichtung mißt dabei eine Drehrate $\psi_t^2$, die sowohl Komponenten der Gierrate $\psi_t^1$ als auch Komponenten der Rollrate $\varphi_t$ enthält. Der Drehbewegungsvektor R stellt eine beliebige Rotation des Kraftfahrzeugs dar, die sowohl aus einer Drehung um die Hochachse des Kraftfahrzeugs (Gierrate) als auch aus einer Drehung um die Längsachse des Kraftfahrzeugs (Rollrate) besteht. Ein solcher Drehbewegungsvektor R ergibt sich beispielsweise dann, wenn das Kraftfahrzeug beim Einfahren in eine geneigte Steilkurve ins Schleudern gerät. Eine solche Drehbewegung R schlägt sich in den beiden Sensoren 18 bzw. 20 durch Messung der Komponenten 22 bzw. 24 entlang der ersten Sensormeßrichtung 14 bzw. zweiten Sensormeßrichtung 16 nieder, die sich durch Projektion des Bewegungsvektors R jeweils auf die Sensormeßrichtungen 14 bzw. 16 ergeben. Die zu dieser Drehbewegung R zugehörige Rollrate $\varphi_t$ läßt sich dann aus den beiden Meßwerten $\psi_t^1$ und $\psi_t^2$ bei bekanntem Winkel $\xi$ zwischen den beiden Sensormeßrichtungen 14 und 16 gemäß folgender Gleichung ermitteln:

$$\dot{\psi}_t^2 = \dot{\psi}_t^1 \cdot \cos(\xi) + \varphi_t \cdot \sin(\xi)$$

$$\text{bzw. aufgel\"ost: } \varphi_t = [\dot{\psi}_t^2 - \dot{\psi}_t^1 \cdot \cos(\xi)]/\sin(\xi).$$

Der zweite Term $\varphi_t \cdot \sin(\xi)$ der ersten Gleichung stellt dabei den Fehler dar, der gemacht wird, wenn man die beiden Meßwerte $\psi_t^2$ und $\psi_t^1 \cdot \cos(\xi)$ als zwei vollständig redundante Meßwerte betrachtet, die lediglich durch den Faktor $\cos(\xi)$ geometrisch korrigiert werden. Bei einem kleinen Winkel $\xi$ wird der Faktor $\sin(\xi)$ jedoch so klein, daß zumindest in den hier relevanten Situationen dieser zweite Term eine redundante Kontrolle akzeptiert werden kann. So hat dieser Faktor beispielsweise bei einem Winkel von $\xi = 6°$ den Wert 0,1, so daß eine gegebenenfalls vorhandene Rollrate nur mit 10% ihres Wertes zu dem Fehler beiträgt. Bei den in der Praxis auftretenden Rollraten beispielsweise in seitengeneigten Steilkurven ist dieser Fehler ausreichend klein, so daß zwei im wesentlichen redundante Meßwerte für die Gierrate vorliegen.

Sollte die Abweichung der Meßwerte zwischen dem ersten und dem zweiten Sensor, also zwischen $\psi_t^2$ und $\psi_t^1 \cdot \cos(\xi)$, einen bestimmten Schwellwert überschreiten, so werden in einer bevorzugten Ausführungsform vom System bestimmte Maßnahmen getroffen. Solche Maßnahmen können beispielsweise darin bestehen, daß das Systems die Toleranz des Reglers erhöht, die Reglerverstärkung zurückschaltet oder den Regler ganz abgeschaltet. Ein solcher Schwellwert liegt beispielsweise bei 3° pro Sekunde, was z.B. eine tolerierbare Obergrenze für den Fehler der Gierrate eines Fahrdynamikreglers darstellt. Eine solche signifikante Abweichung kann entweder von einem Meßfehler einer der beiden Sensoren oder von einer für übliche Straßenneigungen unrealistischen Rollrate, wie sie beispielsweise bei einem Überschlag auftritt, herrühren, wobei beide Fehlerquellen nicht ohne weitere Informationen voneinander unterschieden werden können. Dies ist im Ergebnis jedoch unkritisch, da die adäquate Reaktion bei Auftreten einer solchen Abweichung sowohl für den Fall eines signifikanten Fehlers einer der beiden Sensoren als auch für den Fall einer unrealistischen Rollrate, beispielsweise aufgrund einer Überschlages, in beiden Fällen die selbe Reglermaßnahme, nämlich z.B. das Abschalten des Reglers, darstellt. Bevorzugt wird auch versuchen, zusätzliche vorhandene Informationen und Zustandsparameter zu nutzen, um die Fehlerquelle zu identifizieren, so daß die Reglerschärfe aufrechterhalten werden kann.

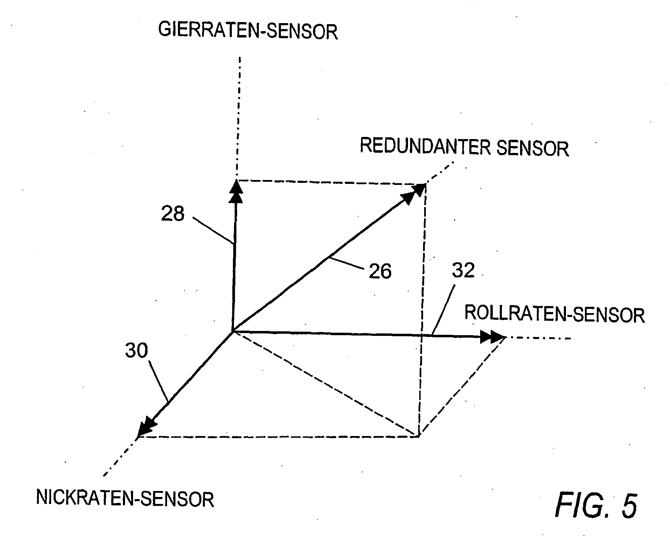

In Fig. 5 ist schematisch eine räumliche Anordnung von Sensoren einer bevorzugten Ausführungsform dargestellt, bei der drei Bewegungssensoren jeweils zueinander orthogonal angeordnet sind, so daß sie ein orthogonales System im Raum bilden. Mit diesen Sensoren wird die Gierrate, die Rollrate und die Nickrate des Kraftfahrzeugs gemessen. Die Meßrichtung eines weiteren redundanten Sensors ist derart im Raum ausgerichtet, daß er mit den drei anderen Sensoren einen spitzen Winkel bildet, d.h. er ist weder parallel noch orthogonal zu den Sensormeßrichtungen der drei anderen Bewegungssensoren angeordnet. Dadurch weist der redundante Sensor eine nicht-verschwindende Komponente entlang jeder der drei Sensormeßrichtungen auf. Bei der dem in Fig. 5 dargestellten Fall weist die mit dem redundanten Sensor gemessene Bewegungsgröße 26 eine Komponente 28 entlang der Richtung der Gierrate, eine Komponente 32 entlang der Richtung der Rollrate und eine Komponente 30 entlang der Richtung der Nickrate auf. Wird nun beispielsweise die Messung der Gierrate und der Rollrate z.B. aufgrund von Plausibilitätsbetrachtungen als fehlerfrei angenommen, kann aus diesen beiden mit Hilfe der Messung des redundanten Sensors der Meßwert des Nickratensensors redundant überprüft werden. Es kann somit jeweils eine der Sensormeßrichtungen Gier-, Roll- oder Nickrate mittels der beiden anderen und mittels des Meßwerts des redundanten Sensors redundant überwacht werden. Bevorzugt kann dies auch wechselweise geschehen, so daß abwechselnd einer der drei Sensoren entlang der Hauptachsen des Kraftfahrzeugs redundant überwacht wird. Somit können schließlich mittels eines einzigen weiteren redundanten Sensors drei unabhängige Sensoren überwacht werden.

**Patentansprüche**

1. Vorrichtung zum Messen von Bewegungsgrößen zur Fahrzustandserkennung eines Kraftfahrzeugs mit:

- einem ersten Sensor (18) zur Messung einer Bewegungsgröße entlang einer ersten Richtung (14) im Raum, und
- einem zweiten Sensor (20) zur Messung der Bewegungsgröße entlang einer zweiten Richtung (16) im Raum,
wobei die erste Sensormeßrichtung mit der zweiten Sensormeßrichtung einen Winkel bildet,
so daß den beiden Sensormeßrichtungen eine Grundrichtung und eine Zusatzrichtung zugeordnet werden
kann, wobei die Grundrichtung mit einer der beiden Sensormeßrichtungen übereinstimmt oder zwischen beiden Sensormeßrichtungen liegt, so daß beide Sensormeßrichtungen eine Komponente entlang der Grundrichtung aufweisen, und wobei die Zusatzrichtung im wesentlichen orthogonal zur Grundrichtung ist und in der durch die beiden Sensormeßrichtungen aufgespannten Ebene liegt, so daß mindestens eine der beiden Sensormeßrichtungen auch eine Komponente entlang der Zusatzrichtung aufweist,

**dadurch gekennzeidinet, dass** die Vorrichtung ausgebildet ist, dass

- einerseits zwei im wesentlichen redundante Werte der Bewegungsgröße entlang der Grundrichtung gemessen werden, und

- andererseits ausgehend von den Meßwerten des ersten Sensors (18) und den Meßwerten des zweiten Sensors (20) zusätzlich die Bewegungsgröße entlang der Zusatzrichtung berechnet wird.

2. Vorrichtung nach Anspruch 1, die derart ausgebildet ist, daß die berechnete Bewegungsgröße entlang der Zusatzrichtung (i) direkt als Eingang für ein Fahrdynamikregelsystem oder Kraftfahrzeugsicherheitssystem verwendet wird oder (ii) als redundanter Wert dient, um den Meßwert eines dritten Sensors zu überwachen, der die Bewegungsgröße entlang der Zusatzrichtung mißt.

3. Vorrichtung nach Anspruch 1 oder 2, die derart ausgebildet ist, daß die Bewegungsgröße eine Drehrate, ein Beschleunigungswert, eine Geschwindigkeit oder eine Kraft ist.

4. Vorrichtung nach Anspruch 3, die derart ausgebildet ist, daß die Bewegungsgröße entlang der Grundrichtung eine der kanonischen Bewegungsgrößen entlang der Hauptachsen des Kraftfahrzeugs ist, nämlich die Gierrate, Rollrate oder Nickrate als Drehraten des Kraftfahrzeugs bzw. die Querbeschleunigung, Längsbeschleunigung oder Vertikalbeschleunigung als Beschleunigungswerte des Kraftfahrzeugs.

5. Vorrichtung nach Anspruch 4, die derart ausgebildet ist, daß die Drehrate entlang der Grundrichtung die (i) Gierrate oder die (ii) Rollrate oder die (iii) Nickrate des Kraftfahrzeugs ist und die Drehrate entlang der Zusatzrichtung die (i) Rollrate oder Nickrate bzw. die (ii) Gierrate oder Nickrate bzw. die (iii) Gierrate oder Rollrate des Kraftfahrzeugs.

6. Vorrichtung nach Anspruch 4, die derart ausgebildet ist, daß der Beschleunigungswert entlang der Grundrichtung die (i) Querbeschleunigung oder die (ii) Längsbeschleunigung oder die (iii) Vertikalbeschleunigung des Kraftfahrzeugs ist und der Beschleunigungswert entlang der Zusatzrichtung die (i) Längsbeschleunigung oder Vertikalbeschleunigung bzw. die (ii) Querbeschleunigung oder Vertikalbeschleunigung bzw. die (iii) Querbeschleunigung oder Längsbeschleunigung des Kraftfahrzeugs.

7. Vorrichtung nach Anspruch 4, die derart ausgebildet ist, daß die Bewegungsgröße entlang der Grundrichtung eine kanonische Bewegungsgröße entlang der Hauptachsen des Kraftfahrzeugs ist, die Bewegungsgröße entlang der Zusatzrichtung jedoch keine kanonische Bewegungsgröße, sondern eine Bewegungsgröße entlang einer Richtung ist, die in einer aus den zwei anderen Richtungen der kanonischen Bewegungsgröße aufgespannten Ebene liegt.

8. Vorrichtung nach Anspruch 7, die einen dritten und vierten Sensor aufweist, die die Bewegungsgrößen entlang der Richtungen der beiden anderen kanonischen Bewegungsgrößen messen, und die derart ausgebildet ist, daß die berechnete Bewegungsgröße entlang der Zusatzrichtung als zusätzlicher redundanter Wert dient, um die Meßwerte des dritten und vierten Sensors zu überwachen.

9. Vorrichtung nach Anspruch 7, die einen dritten Sensor aufweist, der die Bewegungsgröße entlang einer ersten Richtung der beiden anderen kanonischen Bewegungsgrößen mißt, und diese dritte Sensormeßrichtung mit der Zusatzrichtung einen Winkel bildet, wobei die berechnete Bewegungsgröße entlang der Zusatzrichtung einerseits als redundanter Wert dient, um den Meßwert des dritten Sensors zu überwachen, und andererseits ausgehend von dem Meßwert des dritten Sensors und der berechneten Bewegungsgröße entlang der Zusatzrichtung zusätzlich die Bewegungsgröße entlang der zweiten Richtung der beiden anderen kanonischen Bewegungsgrößen berechnet wird.

10. Vorrichtung nach einem der vorhergehenden Ansprüche, die derart ausgebildet ist, daß die Grundrichtung eine Winkelhalbierende der beiden Sensormeßrichtungen bildet, wobei der Winkel insbesondere größer als 0° und kleiner als 45°, insbesondere etwa zwischen 5° und 10° liegt.

11. Vorrichtung nach einem der vorhergehenden Ansprüche, bei der die Sensoren (i) als einzelne Sensorelemente oder (ii) als Sensorcluster, das einige oder alle Sensoren der Vorrichtung in einer Einheit zusammenfaßt, ausgebildet sind.

**12.** Vorrichtung zum Messen von Bewegungsgrößen zur Fahrzustandserkennung eines Kraftfahrzeugs mit:

- einem Satz von ersten Sensoren zur Messung einer Bewegungsgröße entlang verschiedener Richtungen, deren Sensormeßrichtungen ein orthogonales System in der Ebene oder im Raum bilden, wobei ein Sensor aus dem Satz von ersten Sensoren ausgewählt wird, dessen Meßwert überwacht werden soll;
- einem zweiten Sensor zur Messung einer Bewegungsgröße entlang einer zweiten Richtung, **dadurch gekennzeichnet dass** die zweite Sensormeßrichtung einen spitzen Winkel mit jeder der Sensormeßrichtungen des orthogonalen Systems bildet, so daß sie eine Komponente entlang jeder der Sensormeßrichtungen des orthogonalen Systems aufweist;

wobei die Vorrichtung derart ausgebildet ist, daß ausgehend von den Meßwerten des bzw. der nicht zu überwachenden ersten Sensors bzw. Sensoren und dem Meßwert des zweiten Sensors die Bewegungsgröße entlang der Sensormeßrichtung des zu überwachenden ersten Sensors berechnet wird, um für diesen einen redundanten zweiten Meßwert zur Überwachung zu erhalten.

**13.** Vorrichtung nach Anspruch 12, bei der der Satz von ersten Sensoren zwei Sensoren umfaßt, deren Sensormeßrichtungen orthogonal zueinander ausgerichtet sind und von denen einer überwacht werden soll, und bei der der zweite Sensor in der durch die beiden ersten Sensoren aufgespannten Ebene liegt, oder bei der der Satz von ersten Sensoren drei Sensoren umfaßt, deren Sensormeßrichtungen jeweils orthogonal zueinander ausgerichtet sind.

**14.** Vorrichtung nach einem der Ansprüche 12 oder 13, bei der die Bewegungsgröße eine Drehrate oder ein Beschleunigungswert ist, insbesondere bei der die Bewegungsgröße eine der kanonischen Bewegungsgrößen entlang der Hauptachsen des Kraftfahrzeugs ist, nämlich die Gierrate, Rollrate oder Nickrate als Drehraten des Kraftfahrzeugs bzw. die Querbeschleunigung, Längsbeschleunigung oder Vertikalbeschleunigung als Beschleunigungswerte des Kraftfahrzeugs.

**15.** Vorrichtung nach einem der Ansprüche 12 bis 14, die derart ausgebildet ist, daß die zweite Sensormeßrichtung entlang einer Diagonale in der Ebene bzw. einer Raumdiagonale ausgerichtet ist.

**16.** Verfahren zum Messen von Bewegungsgrößen zur Fahrzustandserkennung eines Kraftfahrzeugs mit den folgenden Schritten:

- Messen einer Bewegungsgröße entlang einer ersten Richtung (14) im Raum mit einem ersten Sensor (18);
- Messen der Bewegungsgröße entlang einer zweiten Richtung (16) im Raum mit einem zweiten Sensor (20), wobei die erste Sensormeßrichtung mit der zweiten Sensormeßrichtung einen Winkel bildet, so daß den beiden Sensormeßrichtungen eine Grundrichtung und eine Zusatzrichtung zugeordnet werden kann, wobei die Grundrichtung mit einer der beiden Sensormeßrichtungen übereinstimmt oder zwischen beiden Sensormeßrichtungen liegt, so daß beide Sensormeßrichtungen eine Komponente entlang der Grundrichtung aufweisen, und wobei die Zusatzrichtung im wesentlichen orthogonal zur Grundrichtung ist und in der durch die beiden Sensormeßrichtungen aufgespannten Ebene liegt, so daß mindestens eine der beiden Sensormeßrichtungen auch eine Komponente entlang der Zusatzrichtung aufweist **gekennzeichnet durch:** folgende Schritte
- Bestimmen von zwei im wesentlichen redundanten Werten der Bewegungsgröße entlang der Grundrichtung auf Basis der Messungen der beiden Sensoren; und
- Berechnen der Bewegungsgröße entlang der Zusatzrichtung ausgehend von den Meßwerten des ersten Sensors (18) und den Meßwerten des zweiten Sensors (20).

**17.** Verfahren nach Anspruch 16, bei dem die Bewegungsgröße eine Drehrate oder ein Beschleunigungswert ist, insbesondere bei dem die Bewegungsgröße entlang der Grundrichtung eine der kanonischen Bewegungsgrößen entlang der Hauptachsen des Kraftfahrzeugs ist, nämlich die Gierrate, Rollrate oder Nickrate als Drehraten des Kraftfahrzeugs bzw. die Querbeschleunigung, Längsbeschleunigung oder Vertikalbeschleunigung als Beschleunigungswerte des Kraftfahrzeugs, insbesondere bei dem die Drehrate entlang der Grundrichtung die Gierrate des Kraftfahrzeugs ist und die Drehrate entlang der Zusatzrichtung die Rollrate oder Nickrate des Kraftfahrzeugs.

**18.** Verfahren nach Anspruch 17, bei dem mit der entlang der Zusatzrichtung berechneten Rollrate die Seitenneigung des Kraftfahrzeugs berechnet wird, insbesondere mit der berechneten Seitenneigung eine gemessene Querbeschleunigung korrigiert wird und insbesondere mit der korrigierten Querbeschleunigung die Schwimmwinkelgeschwindigkeit berechnet wird.

19. Verfahren nach einem der Ansprüche 16 bis 18, bei dem die Toleranz des Reglers eines Fahrdynamikregelsystems erhöht wird oder dieser abgeschaltet wird, wenn die Abweichung der Meßwerte zwischen dem ersten und dem zweiten Sensor einen bestimmten Schwellwert überschreitet, wobei die Winkelstellung der Sensormeßrichtungen zueinander beim Vergleichen der Meßwerte berücksichtigt.


**Claims**

1. Device for measuring motion quantities for the purpose of recognizing the driving status of a motor vehicle, having

   - a first sensor (18) for measuring a motion quantity along a first direction (14) in space, and
   - a second sensor (20) for measuring the motion quantity along a second direction (16) in space, the first measuring direction and the second measuring direction of the sensors forming an angle,
   so that a primary direction and an additional direction can be assigned to the two measuring directions of the sensors, the primary direction coinciding with one of the two measuring directions of the sensors or lying between the two measuring directions of the sensors, and wherein the additional direction is essentially perpendicular to the primary direction and lies in the plane defined by the two measuring directions of the sensors, so that at least one of the two measuring directions of the sensors also has a component along the additional direction, **characterized in that** the device being configured so that
   - on the one hand, two essentially redundant values of the motion quantity are measured along the primary direction and
   - on the other hand, additionally a motion quantity along the additional direction is calculated from the values measured by the first sensor (18) and the values measured by the second sensor (20).

2. Device as defined in claim 1, configured so that the calculated motion quantity along the additional direction is used (i) directly as input for the driving dynamics control system or for the safety system of the motor vehicle or (ii) as redundant value for monitoring the value measured by a third sensor that measures the motion quantity along the additional direction.

3. Device as defined in claim 1 or 2, configured so that the motion quantity is a rotation rate, an acceleration value, a velocity or a force.

4. Device as defined in claim 3, configured so that the motion quantity along the primary direction is one of the canonical motion quantities along the main axes of the motor vehicle, namely the yawing rate, rolling rate or pitching rate as rotation rates of the motor vehicle or, as an acceleration value of the motor vehicle, the transverse acceleration, longitudinal acceleration or vertical acceleration.

5. Device as defined in claim 4, configured so that the rotation rate along the primary direction is the (i) yawing rate or the (ii) rolling rate or the (iii) pitching rate of the motor vehicle and the rotation rate along the additional direction is the (i) rolling rate or pitching rate, and accordingly the (ii) yawing rate or pitching rate, and accordingly the (iii) yawing rate or rolling rate of the motor vehicle.

6. Device as defined in claim 4, configured so that the acceleration value along the primary direction is the (i) transverse acceleration or the (ii) longitudinal acceleration or the (iii) vertical acceleration of the motor vehicle and the acceleration value along the additional direction is the (i) longitudinal acceleration or vertical acceleration, and accordingly the (ii) transverse acceleration or vertical acceleration, and accordingly the (iii) transverse acceleration or longitudinal acceleration of the motor vehicle.

7. Device as defined in claim 4, configured so that the motion quantity along the primary direction is a canonical motion quantity along the main axes of the motor vehicle, but the motion quantity along the additional direction is not a canonical motion quantity but, rather, a motion quantity along one of the directions lying in a plane formed by the two other directions of the canonical motion quantity.

8. Device as defined in claim 7, having a third and a fourth sensor that measure the motion quantities along the directions of the two other canonical motion quantities and that are configured so that the calculated motion quantity along the additional direction serves as an additional redundant value for the purpose of monitoring the third and fourth sensor.

9. Device as defined in claim 7, having a third sensor that measures the motion quantity along a first direction of the two other canonical motion quantities, and this third measuring direction of the sensor forms an angle with the additional direction, the calculated motion quantity along the additional direction, on the one hand, serving as redundant value for the purpose of monitoring the measured value of the third sensor and, on the other, additionally the motion quantity along the second direction of the two other canonical motion quantities is calculated from the measured value of the third sensor and the calculated motion quantity along the additional direction.

10. Device as defined in one of the preceding claims, configured so that the primary direction divides in half the angle between the two measuring directions of the sensors, so that the angle is in particular greater than 0° and smaller than 45°, in particular between about 5° and 10°.

11. Device as defined in one of the preceding claims, configured so that the sensor or sensors (i) are individual sensor elements or (ii) are configured as sensor clusters combining a few or all sensors of the device into a unit.

12. Device for measuring motion quantities for the purpose of recognizing the driving status of a motor vehicle, having:

- a set of first sensors for measuring a motion quantity along different directions, the measuring directions of said sensors forming a perpendicular system in a plane or in space, a sensor being selected from the set of first sensors the measured value of which sensor is to be monitored;
- a second sensor for measuring a motion quantity along a second direction, **characterized in that** the second measuring direction of the sensor forming an acute angle with each of the measuring directions of the sensors of the perpendicular system so that it has a component along each measuring direction of the sensors of the perpendicular system;
the device being configured so that the motion quantity along the measuring direction of the first sensor to be monitored is calculated from the measured values of the first sensor or first sensors that are not to be monitored and the measured value of the second sensor, for the purpose of obtaining for said sensor a redundant second measured value for monitoring purposes.

13. Device as defined in-claim 12, wherein the set of first sensors comprises two sensors the measuring directions of which are oriented perpendicular to one another and one of which is to be monitored, and wherein the second sensor lies in the plane formed by the two first sensors, or wherein the set of first sensors comprises three sensors the measuring directions of which are oriented perpendicular to one another.

14. Device as defined in one of claims 12 or 13, wherein the motion quantity is a rotation rate or an acceleration value, wherein in particular the motion quantity is one of the canonical motion quantities along the main axes of the motor vehicle, namely the yawing rate, rolling rate or pitching rate of the motor vehicle or, as an acceleration value of the motor vehicle, the transverse acceleration, longitudinal acceleration or vertical acceleration.

15. Device as defined in one of claims 12 to 14, configured so that the second measuring direction of the sensor is oriented along a diagonal in a plane or a diagonal in space.

16. Method for measuring motion quantities for the purpose of recognizing the driving status of a motor vehicle comprising the following steps:

- measuring a motion quantity along a first direction (14) in space with a first sensor (18);
- measuring a motion quantity along a second direction (16) in space with a second sensor (20), the first measuring direction forming an angle with the second measuring direction of the sensors,
so that the two measuring directions of the sensors can be assigned a primary direction and an additional direction, the primary direction coinciding with one of the two measuring directions of the sensors or lying between the two measuring directions of the sensors so that both measuring directions have a component along the primary direction, and the additional direction is essentially perpendicular to the primary direction and lies in the plane defined by the two measuring directions of the sensors so that at least one of said two measuring directions also has a component along the additional direction, **characterized by** the following steps:
- based on measurements of the two sensors, determining two essentially redundant values of the motion quantity along the primary direction, and
- calculating the motion quantity along the additional direction from the values measured by the first sensor (18) and the values measured by the second sensor (20).

**17.** Method as defined in claim 16, wherein the motion quantity is a rotation rate or an acceleration value, wherein in particular the motion quantity along the primary direction is a canonical motion quantity along the main axes of the motor vehicle, namely the yawing rate, rolling rate or pitching rate or, as an acceleration value of the motor vehicle, the transverse acceleration, longitudinal acceleration or vertical acceleration, wherein in particular the rotation rate along the primary direction is the yawing rate of the motor vehicle and the rotation rate along the additional direction is the rolling rate or pitching rate of the motor vehicle.

**18.** Method as defined in claim 17, wherein the lateral inclination of the motor vehicle is calculated with the aid of the calculated rolling rate along the additional direction, wherein in particular a measured transverse acceleration is corrected by means of the calculated lateral inclination and wherein in particular the float angle velocity is calculated with the aid of the corrected transverse acceleration.

**19.** Method as defined in one of claims 16 to 18, wherein the tolerance of the controller of a driving dynamics system of a motor vehicle is increased or said controller is turned off when the deviation between the measured values of the first and the second sensor exceeds a certain threshold value, the position of the angle of the measuring directions of the sensors to one another being taken into account in the comparison of the measured values.

**Revendications**

**1.** Dispositif de mesure de paramètres de mouvement en vue de détecter la situation de conduite d'un véhicule automobile, comportant :

- un premier capteur (18) pour mesurer un paramètre de mouvement le long d'une première direction (14) dans l'espace, et
- un deuxième capteur (20) pour mesurer un paramètre de mouvement le long d'une deuxième direction (16) dans l'espace, la première direction de mesure étant disposée en angle par rapport à la deuxième direction de mesure,
de telle sorte qu'une direction de base et une direction auxiliaire peuvent être associées aux deux directions de mesure des capteurs, la direction de base coïncidant avec une des deux directions de mesure des capteurs ou étant située entre les deux directions de mesure des capteurs, de telle sorte que les deux directions de mesure des capteurs comportent une composante le long de la direction de base, et la direction auxiliaire étant sensiblement orthogonale à la direction de base et étant située dans le plan déployé par les deux directions de mesure des capteurs, de telle sorte qu'au moins l'une des deux directions de mesure des capteurs comporte également une composante le long de la direction auxiliaire,

**caractérisé en ce que**

- d'une part, deux valeurs sensiblement redondantes du paramètre de mouvement sont mesurées le long de la direction de base, et
- d'autre part, le paramètre de mouvement le long de la direction auxiliaire est calculé en plus à partir des valeurs de mesure du premier capteur (18) et des valeurs de mesure du deuxième capteur (20).

**2.** Dispositif selon la revendication 1, lequel est réalisé de telle sorte que le paramètre de mouvement calculé le long de la direction auxiliaire est utilisé (i) directement comme valeur d'entrée pour un système de réglage dynamique de la conduite ou système de sécurité du véhicule ou (ii) constitue une valeur redondante pour contrôler la valeur de mesure d'un troisième capteur, qui mesure le paramètre de mouvement le long de la direction auxiliaire.

**3.** Dispositif selon la revendication 1 ou 2, lequel est réalisé de telle sorte que le paramètre de mouvement est une vitesse de rotation, une valeur d'accélération, une vitesse ou une force.

**4.** Dispositif selon la revendication 3, lequel est réalisé de telle sorte que le paramètre de mouvement le long de la direction de base est un des paramètres de mouvement canoniques le long des axes principaux du véhicule, à savoir la vitesse de lacet, la vitesse de roulement ou la vitesse de tangage en tant que vitesses de rotation du véhicule et/ou l'accélération transversale, l'accélération longitudinale ou l'accélération verticale en tant que valeurs d'accélération du véhicule.

**5.** Dispositif selon la revendication 4, lequel est réalisé de telle sorte que la vitesse de rotation le long de la direction de base est (i) la vitesse de lacet ou (ii) la vitesse de roulement ou (iii) la vitesse de tangage du véhicule, et la vitesse de rotation le long de la direction auxiliaire est (i) la vitesse de roulement ou la vitesse de tangage et/ou (ii) la vitesse de lacet ou la vitesse de tangage et/ou (iii) la vitesse de lacet ou la vitesse de roulement du véhicule.

**6.** Dispositif selon la revendication 4, lequel est réalisé de telle sorte que la valeur d'accélération le long de la direction de base est (i) l'accélération transversale ou (ii) l'accélération longitudinale ou (iii) l'accélération verticale du véhicule et la valeur d'accélération le long de la direction auxiliaire est (i) l'accélération longitudinale ou l'accélération verticale et/ou (ii) l'accélération transversale ou l'accélération verticale ou (iii) l'accélération transversale ou l'accélération longitudinale du véhicule.

**7.** Dispositif selon la revendication 4, lequel est réalisé de telle sorte que le paramètre de mouvement le long de la direction de base est un paramètre de mouvement canonique le long des axes principaux du véhicule, le paramètre de mouvement le long de la direction auxiliaire n'est cependant pas un paramètre de mouvement canonique, mais un paramètre de mouvement le long d'une direction qui se situe dans un plan déployé à partir des deux autres directions du paramètre de mouvement canonique.

**8.** Dispositif selon la revendication 7, qui comporte un troisième et un quatrième capteur qui mesurent des paramètres de mouvement le long des directions des deux autres paramètres de mouvement canoniques, lequel est réalisé de telle sorte que le paramètre de mouvement calculé le long de la direction auxiliaire est utilisé en tant que valeur supplémentaire redondante pour contrôler les valeurs de mesure du_ troisième et du quatrième capteur.

**9.** Dispositif selon la revendication 7, qui comporte un troisième capteur qui mesure le paramètre de mouvement le long d'une première direction des deux autres paramètres de mouvement canoniques, et cette troisième direction de mesure du capteur est disposée en angle avec la direction auxiliaire, le paramètre de mouvement mesuré le long de la direction auxiliaire étant, d'une part, utilisé en tant que valeur redondante pour contrôler la valeur de mesure du troisième capteur, et, d'autre part, le paramètre de mouvement le long de la deuxième direction des deux autres paramètres de mouvement canoniques étant calculé en plus à partir de la valeur de mesure du troisième capteur et du paramètre de mouvement calculé le long de la direction auxiliaire.

**10.** Dispositif selon l'une quelconque des revendications précédentes, lequel est réalisé de telle sorte que la direction de base forme une bissectrice de l'angle formé par les deux directions de mesure des capteurs, l'angle étant en particulier supérieur à 0° et inférieur à 45°, se situant en particulier sensiblement entre 5° et 10°.

**11.** Dispositif selon l'une quelconque des revendications précédentes, dans lequel les capteurs sont réalisés (i) sous forme de capteurs individuels ou (ii) sous forme de groupe de capteurs, qui regroupe dans une unité quelques-uns ou tous les capteurs du dispositif.

**12.** Dispositif de mesure de paramètres de mouvement en vue de détecter la situation de conduite d'un véhicule, comportant :

- un jeu de premiers capteurs, destinés à mesurer un paramètre de mouvement le long de différentes directions et dont les directions de mesure forment un système dans un plan ou dans l'espace, un capteur, dont la valeur de mesure doit être contrôlée, étant sélectionné dans le jeu de premiers capteurs ;
- un jeu de deuxièmes capteurs, destinés à mesurer un paramètre de mouvement le long d'une deuxième direction,

**caractérisé en ce que** la deuxième direction de mesure forme un angle aigu avec chacune des directions de mesure des capteurs du système orthogonal, de telle sorte qu'elle comporte une composante le long de chacune des directions de mesure des capteurs du système orthogonal ;
ledit dispositif étant réalisé de telle sorte que, à partir des valeurs de mesure du premier capteur ou des premiers capteurs à ne pas contrôler et à partir de la valeur de mesure du deuxième capteur, est calculé le paramètre de mouvement le long de la direction de mesure du premier capteur à contrôler, afin d'obtenir pour celui-ci une deuxième valeur de mesure redondante en vue du contrôle.

**13.** Dispositif selon la revendication 12, dans lequel le jeu de premiers capteurs comporte deux capteurs, dont les directions de mesure sont orientées orthogonalement l'une par rapport à l'autre et parmi lesquels un doit être contrôlé, et dans lequel le deuxième capteur est situé dans le plan déployé par les deux premiers capteurs, ou dans lequel le jeu de premiers capteurs comporte trois capteurs dont les directions de mesure sont orientées respectivement orthogonalement les unes par rapport aux autres.

**14.** Dispositif selon la revendication 12 ou 13, dans lequel le paramètre de mouvement est une vitesse de rotation ou une valeur d'accélération, en particulier dans lequel le paramètre de mouvement est un des paramètres de mouvement canoniques le long des axes principaux du véhicule, à savoir la vitesse de lacet, la vitesse de roulement ou la vitesse de tangage en tant que vitesses de rotation du véhicule et/ou l'accélération transversale, l'accélération longitudinale ou l'accélération verticale en tant que valeurs d'accélération du véhicule.

**15.** Dispositif selon l'une quelconque des revendications 12 à 14, **caractérisé en ce que** la deuxième direction de mesure des capteurs est orientée le long d'une diagonale dans le plan ou d'une diagonale dans l'espace.

**16.** Procédé de mesure de paramètres de mouvement en vue de détecter la situation de conduite d'un véhicule automobile, comportant les étapes suivantes :

- mesure d'un paramètre de mouvement le long d'une première direction (14) dans l'espace avec un premier capteur (18),
- mesure d'un paramètre de mouvement le long d'une deuxième direction (16) dans l'espace avec un deuxième capteur (20), la première direction de mesure étant disposée en angle par rapport à la deuxième direction de mesure,
de telle sorte qu'une direction de base et une direction auxiliaire peuvent être associées aux deux directions de mesure des capteurs, la direction de base coïncidant avec une des deux directions de mesure des capteurs ou étant située entre les deux directions de mesure des capteurs, de telle sorte que les deux directions de mesure des capteurs comportent une composante le long de la direction de base, et la direction auxiliaire étant sensiblement orthogonale à la direction de base et étant située dans le plan déployé par les deux directions de mesure des capteurs, de telle sorte qu'au moins l'une des deux directions de mesure des capteurs comporte également une composante le long de la direction auxiliaire ;

**caractérisé par** les étapes suivantes :

- détermination de deux valeurs sensiblement redondantes du paramètre de mouvement le long de la direction de base sur la base des mesures des deux capteurs ; et
- détermination du paramètre de mouvement le long de la direction auxiliaire à partir des valeurs de mesure du premier capteur (18) et des valeurs de mesure du deuxième capteur (20).

**17.** Procédé selon la revendication 16, dans lequel le paramètre de mouvement est une vitesse de rotation ou une valeur d'accélération, en particulier dans lequel le paramètre de mouvement le long de la direction de base est un des paramètres de mouvement canoniques le long des axes principaux du véhicule, à savoir la vitesse de lacet, la vitesse de roulement ou la vitesse de tangage en tant que vitesses de rotation du véhicule et/ou l'accélération transversale, l'accélération longitudinale ou l'accélération verticale en tant que valeurs d'accélération du véhicule, en particulier dans lequel la vitesse de rotation le long de la direction de base est la vitesse de lacet du véhicule et la vitesse de rotation le long de la direction auxiliaire est la vitesse de roulement ou la vitesse de tangage du véhicule.

**18.** Procédé selon la revendication 17, dans lequel l'inclinaison latérale du véhicule est calculée avec la vitesse de roulement calculée le long de la direction auxiliaire, en particulier une accélération transversale mesurée est corrigée par l'inclinaison latérale calculée et en particulier la vitesse d'angle de flottaison est calculée avec l'accélération transversale corrigée.

**19.** Procédé selon l'une quelconque des revendications 16 à 18, dans lequel la tolérance du régulateur d'un système de réglage dynamique de la conduite est augmentée ou celui-ci est désactivé lorsque la divergence des valeurs de mesure entre le premier et le deuxième capteur est supérieure à une valeur seuil déterminée, la position angulaire des directions de mesure des capteurs l'une par rapport l'autre étant prise en compte lors de la comparaison des valeurs de mesure.

FIG.1

FIG.3

FIG.2

*FIG.4*

FIG. 5

**EP 1 628 863 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6513832 B
- EP 1053917 A